# EUROPÄISCHE PATENTSCHRIFT

(11) **EP 3 210 838 B1**
(45) Veröffentlichungstag und Bekanntmachung des Hinweises auf die Patenterteilung: **10.04.2019**
(21) Anmeldenummer: 17154797.9
(22) Anmeldetag: 06.02.2017
(51) Int. Cl.: B60R 25/20

(54) **VERFAHREN ZUR ERKENNUNG EINER MANIPULATION EINER KOMMUNIKATION ZWISCHEN EINER FERNBEDIENBAREN VERRIEGELUNGSEINHEIT UND EINER DAZU KORRESPONDIERENDEN FERNBEDIENUNG**
METHOD FOR DETECTING A MANIPULATION OF THE COMMUNICATION BETWEEN A LOCKING UNIT AND A CORRESPONDING REMOTE CONTROL
PROCÉDÉ POUR RECONNAÌTRE UNE MANIPULATION DE LA COMMUNICATION ENTRE UNE UNITÉ DE VERROUILLAGE ET UNE TÉLÉCOMMANDE CORRESPONDANTE

(30) Priorität: 26.02.2016 DE 102016203057
(43) Veröffentlichungstag der Anmeldung: 30.08.2017
(73) Patentinhaber: VOLKSWAGEN AKTIENGESELLSCHAFT, 38440 Wolfsburg (DE)
(72) Erfinder: Sammer, Patrick, 13156 Berlin (DE); Beyer, Karsten, 13189 Berlin (DE); Brückner, Claus-Peter, 38104 Braunschweig (DE)

(56) Entgegenhaltungen:
- EP-A2- 1 939 820
- EP-B1- 1 499 522
- EP-B1- 1 741 069
- WO-A1-2014/056004
- DE-A1-102007 057 483
- DE-A1-102008 007 834

## Beschreibung

Die vorliegende Erfindung bezieht sich auf ein Konzept zur Erkennung einer Manipulation einer Kommunikation zwischen einer fernbedienbaren Verriegelungseinheit und einer dazu korrespondierenden Fernbedienung.

Fernbedienbare Verriegelungseinheiten sind heutzutage weitverbreitet, tragen in vielfältigen Anwendungsbereichen zu einer deutlichen Erhöhung von Bedienkomfort bei und räumen darüber hinaus neue Möglichkeiten zur Nutzung verriegelbarer Objekte ein. Fernbedienbare Verriegelungseinheiten bilden gemeinsam mit zu ihnen korrespondierenden Fernbedienungen, über deren Betätigung sie sich ver- und entriegeln lassen, fernbedienbare Verriegelungssysteme.

Neben einer Verbreitung fernbedienbarer Verriegelungseinheiten zum Beispiel an Garagen- und Grundstückstoren sowie an Eingangstüren modern ausgestatteter Häuser und Wohnungen, die zunehmend unter dem Oberbegriff Smart-Home (englisch für "Kluges Zuhause") bekannt werden, findet man sie vor allem in Kraftfahrzeugen (Kfz), insbesondere bei Personenkraftwagen (Pkw). Dort können sie ein bequemes und zügiges Ver- und Entriegeln des Kfz ermöglichen. Eine Verwendung eines mechanischen Schlüssels kann dann nicht mehr erforderlich sein. Vorteilhaft an solchen Verriegelungssystemen gegenüber rein auf mechanischen Schlüsseln basierenden Systeme kann neben einem höheren Benutzerkomfort zum Beispiel sein, dass sie weniger mechanischen Einwirkungen und damit einem geringeren Verschließ ausgesetzt sein können. Weiter kann vorteilhaft sein, dass fernbedienbare Verriegelungssysteme robuster gegen Witterungseinflüsse sein können als rein mechanische Verriegelungssysteme. Fernbedienbare Verriegelungssysteme in Kfz sind heute in nahezu allen neuhergestellten Pkws zu finden und werden von Pkw-Fahrern und Kunden schon fast als selbstverständliches Ausstattungsmerkmal vorausgesetzt. (siehe EP1499522B).

Die Patentanmeldung DE 10 2012 009 491 A1 betrifft einen Schutz gegen Störsignale bei Funkschlüsseln eines Fahrzeugs und umfasst alle Schließ- und Öffnungsvorgänge der Türen, des Kofferraums, des Tankdeckels und ggfs. auch der Motorhaube eines Fahrzeugs.

Die Patentanmeldung DE 11 2010 004 932 T5 bezieht sich auf die Kommunikation zwischen einem Kommunikationsgerät und einem Notfallmeldesystem, insbesondere auf das Erkennen eines Störens oder eines Versuchens eines Störens dieser Kommunikation.

Die Patentanmeldung DE 102 59 590 A1 bezieht sich auf ein Fahrzeugsicherungssystem in Form eines Keyless-Go-Systems und ein Betriebsverfahren dafür.

Die Patentanmeldung DE 101 19 512 A1 betrifft eine Empfangsvorrichtung für Zugangskontrollsysteme und insbesondere eine Diebstahlsicherung für Kraftfahrzeuge.

Die Patentanmeldung DE 196 10 116 A1 betrifft ein Diebstahlschutzsystem für ein Kraftfahrzeug.

Die Patentanmeldung US 2003 / 0 222 813 A1 bezieht sich auf ein Verfahren und eine Vorrichtung zur Detektion eines Radiowellenstörsenders.

Das europäische Patent EP 1 499 522 B1 beschreibt ein System zur Steuerung eines funkferngesteuerten Zugangs zu einem Kfz. Dabei werden störende Funksignale erfasst, die den funkferngesteuerten Zugang beeinträchtigen könnten.

Das europäische Patent EP 1 741 069 B1 beschreibt ein Konzept zum automatischen Verriegeln eines Kfz, wobei elektromagnetische Umgebungssignale gemessen werden und in Abhängigkeit dieser Messung das Kfz verriegelt wird oder nicht.

Die DE 10 2008 007 834 A1 beschreibt ein Mehrkanal-Funkschließsystem, bei dem ein Kommunikationskanal mit dem niedrigsten Störpegel ausgewählt wird.

Die EP 1 939 820 A1 beschreibt ein Sicherheitsanzeigesystem das einen Benutzer über einen Sicherheitsstatus remote informiert.

Eine Fernbedienung werde im Folgenden aufgrund ihrer Funktion als Schlüssel bezeichnet. Zu einer Verriegelungseinheit korrespondierende Schlüssel, mit anderen Worten, Schlüssel, mit welchen sich die Verriegelungseinheit wie vom Hersteller beabsichtigt ver- und entriegeln lässt, werden im Folgenden als authentifizierbare Schlüssel bezeichnet, fremde, nicht korrespondierende Schlüssel als nicht authentifizierbare Schlüssel.

Zum Ver- und Entriegeln der fernbedienbaren Verriegelungseinheit, hier die Zentralverriegelung des Kfz, kann ein authentifizierbarer Schlüssel über eine meist drahtlose Kommunikationsverbindung, wie eine Funk- oder Infrarotverbindung, einen Code an sie senden. Die Zentralverriegelung kann darauf im ungestörten, nicht manipulierten Fall den Code fehlerfrei empfangen und den Schlüssel beziehungsweise den Code authentifizieren und das Kfz ver- beziehungsweise entriegeln. "Authentifizieren" beziehungsweise "Authentifizierung" bedeutet also in dem hier und in den weiter dargestellten Zusammenhängen das Überprüfen einer Gültigkeit gekoppelt an die Bestätigung dieser Gültigkeit, hier das Überprüfen und Bestätigen der Gültigkeit des Codes zum Ver- beziehungsweise Entriegeln.
Meist kann insbesondere ein erfolgtes Verriegeln mit einem kurzen Aufblinken einer Warnblinkanlage des Kfz und/oder einer Ausgabe eines oder mehrerer kurzer Töne durch das Kfz einem Nutzer des Kfz quittiert werden. Kann zum Beispiel bei einem Verriegelungsvorgang ein Code empfangen werden, der nicht als gültig erkannt werden kann, so kann in der Regel die Zentralverriegelung das Kfz nicht verriegeln und folglich keine Verriegelung dem Nutzer quittieren.

Es ist meist genau an dieser Stelle, das heißt, bei Empfang und Überprüfung der Gültigkeit eines Codes zum Verriegeln des Kfz, dass Manipulationsversuche von Dritten, die eine Missbrauchsabsicht am Kfz haben, begangen werden.
Ein Dritter kann dazu Störsender, auch Jammer genannt (englisch "to jam" für blockieren), benutzen, um mit diesem leistungsstarke Störsignale zu erzeugen. Diese Störsignale können sich einem Signal, meist einem Funksignal, überlagern, welches vom authentifizierbaren Schlüssel zum Kfz gesendet und den Code zum Verriegeln des Kfz übertragen kann. Durch die an einem der Zentralverriegelung zugeordneten Empfänger beziehungsweise an einer dem Empfänger zugeordneten Antenne entstehenden Interferenzen kann der übertragene Code oft nicht mehr authentifiziert werden, da er infolge der Interferenzen häufig gestört und damit verfälscht ist. In Ermangelung der Authentifizierung des Codes kann die Zentralverriegelung das Kfz oft nicht verriegeln. Folglich kann sie dem Nutzer eine Verriegelung nicht quittieren. Darüber hinaus kann sie oft auch nicht den Nutzer warnen, dass eine vom Nutzer beabsichtigte Verriegelung nicht stattgefunden hat. Die Zentralverriegelung hat keinen Anhaltspunkt dafür, dass der Nutzer eine Verriegelungsabsicht hatte, denn meist erkennt sie das vom authentifizierten Schlüssel gesendete Signal nicht mehr als ein solches, welches zur Übertragung eines Verriegelungscodes genutzt wird.

Einige für Kfz verfügbare Verriegelungssysteme können den Verriegelungszustand nach einem Verriegelungsversuch mittels eines authentifizierbaren Schlüssels auf dem Schlüssel anzeigen lassen. Dabei verwenden solche Systeme ein Nachrichtenübertragungsverfahren, in dem die Zentralverriegelung, nachdem sie einen vom Schlüssel empfangenen Verriegelungscode authentifiziert und somit eine Verriegelung vorgenommen hat, an den Schlüssel eine Bestätigungsnachricht über die erfolgte Verriegelung übermittelt. Der Schlüssel kann die durch die Zentralverriegelung bestätigte Verriegelung seinerseits durch zum Beispiel eine grün blinkende Leuchtanzeige dem Nutzer signalisieren. Erhält der Schlüssel diese Bestätigungsnachricht nicht nach einer vorgeschriebenen Zeit, da keine Verriegelung erfolgte und somit keine Bestätigungsnachricht versendet wurde, so löst er auf sich selbst einen Alarm, zum Beispiel in Form einer rot blinkenden Leuchtanzeige oder in Form eines Vibrierens, aus.

Nachteilig an solchen Verfahren, vor allem bei sogenannten passiven schlüssellosen Zugangssystemen (englisch Passive-Keyless-Systems, kurz PK-Systeme) kann sein, dass der Alarm häufig nicht vom Nutzer wahrgenommen werden kann, da bei PK-Systemen der Nutzer den Schlüssel nicht in der Hand zu halten braucht, sondern ihn zum Beispiel in einer Tasche tragen kann, so dass vom Schlüssel ausgehendende Alarmsignale stark gedämpft und somit nicht mehr wahrnehmbar sein können.
Weiterhin kann an diesem Verfahren nachteilhaft sein, dass sowohl die Anzeige einer erfolgten Verriegelung als auch die Ausgabe eines Alarmsignals durch den Schlüssel zu einem erhöhten Stromverbrauch im Schlüssel und damit zu häufigeren, den Komfort des Nutzers eventuell mindernden Batteriewechseln führen können.
Ein weiterer Nachteil dieses Verfahrens, vor allem bei sogenannten Remote-Keyless-Entry-Systemen (englisch für "Fernbediente schlüssellose Zugangssysteme", kurz RKE-Systeme), welche dadurch gekennzeichnet sind, dass der Nutzer einen authentifizierbaren Schlüssel normalerweise in die Hand nimmt, um zumeist über einen Knopfdruck ein Signal mit einem Code zum Ver- oder Entriegeln an einen von der Verriegelungseinheit zugeordneten Empfänger zu senden, kann sein, dass sich der Nutzer zusammen mit dem authentifizierbaren Schlüssel beim Absenden des Signals bereits in einiger Entfernung zum Kfz befinden kann. Eine durch diese Entfernung höher ausfallende Streckendämpfung des Signals kann eine Reduktion der Signalleistung am Empfänger der Zentralverriegelung und somit ein Gelingen eines Manipulationsversuches begünstigen. Kann der authentifizierbare Schlüssel den Nutzer infolge des Ausbleibens einer Bestätigungsnachricht noch warnen, so muss der Nutzer oft in die unmittelbare Nähe des Kfz zurückkehren, um so aus geringerer Entfernung und folglich bei geringerer Streckendämpfung, den Verriegelungsvorgang zu wiederholen oder um diesen auf einem alternativen Weg, zum Beispiel durch Verwendung eines mechanisches Schlüssels, durchzuführen.

Zur Vermeidung dieses Nachteils gibt es nach dem Stand der Technik Verriegelungssysteme, welche zum Beispiel einen Funkkanalwechsel bei Ausbleiben der Bestätigungsnachricht durchführen, um in diesem, eventuell nicht gestörten Funkkanal einen Verriegelungscode zu übertragen, oder welche von vornherein mehrere Funkkanäle parallel zur Übertragung eines Verriegelungscodes nutzen.
Nachteilig daran kann sein, dass breitbandige Störer, welche Interferenzen in sämtlichen Funkkanälen verursachen können, nicht überwunden werden können.
Außerdem kann nachteilig sein, dass bei einem Funkkanalwechsel nicht bekannt sein kann, ob in einem anderen Kanal die Störleistung geringer ist und ob daher ein erneutes Senden sinnvoll sein kann oder nur einen erhöhten Energieverbrauch verbunden mit einer schnelleren Entladung der Batterie des Schlüssels zur Folge haben kann. Außerdem kann bei der parallelen Nutzung mehrerer Funkkanäle nachteilig sein, dass eine höhere Sendeleistung im Schlüssel erforderlich werden kann, was nicht nur zu einem erhöhtem Energieverbrauch im Schlüssel sondern auch zu leistungsstärkeren Intermodulationsprodukten im Signal des Schlüssels und damit zu einer erhöhten Empfindlichkeit des Signals gegenüber Störern führen kann.

Auch gibt es Verriegelungssysteme, welche über den von der Verriegelungseinheit umfassten Empfänger Störsignale anhand einer vorbestimmten Zeitdauer detektieren. Überschreitet ein empfangenes Signal diese Zeitdauer, welche normalerweise wesentlich länger als die Signaldauer des Signals des authentifizierbaren Schlüssels ist, kann es als Störsignal detektiert werden, so dass das Verriegelungssystem einen Alarm auslösen kann. Nachteilig daran kann sein, dass, weil lediglich die Zeitdauer des Signals betrachtet wird, ein leistungsschwaches Signal als Störsignal detektiert werden kann, welches keine starken Interferenzen bei Empfang des Signals des authentifizierbaren Schlüssels verursachen kann. Infolge zeitlich ausgedehnter, aber leistungsschwacher Störsignale ausgelöste Alarme können somit Fehlalarme sein, welche den Nutzer verwirren und sein Vertrauen in ein Warnsystem senken können.

Daher besteht ein Bedarf, die bestehenden Verfahren zur Erkennung einer Manipulation der Kommunikation zwischen einer fernbedienbaren Verriegelungseinheit und einer dazu korrespondierenden Fernbedienung beziehungsweise einem authentifizierbaren Schlüssel zu verbessern. Diesem Bedarf wird durch die Verfahren und Systeme gemäß der unabhängigen Ansprüche Rechnung getragen.

Ausführungsbeispiele dieser Erfindung können dies wie folgt erreichen: Zunächst wird detektiert, ob ein Nutzer einer fernbedienbaren Verriegelungseinheit beabsichtigt, diese zu verriegeln. Kann eine solche Verrieglungsabsicht festgestellt werden, so wird überprüft, ob Störsignale vorhanden sind, welche die Kommunikation zwischen der fernbedienbaren Verriegelungseinheit und einer zu dieser korrespondierenden Fernbedienung beeinträchtigenden können. Können Störsignale detektiert werden, so wird ein Warnsignal erzeugt, um den Nutzer darauf aufmerksam zu machen, dass die Kommunikation zwischen der Verriegelungseinheit und der Fernbedienung gestört wird oder gestört wurde und dass somit ein mittels der Verriegelungseinheit und der Fernbedienung zu verriegelndes Objekt möglicherweise nicht verriegelt werden kann beziehungsweise nicht verriegelt wurde.

Vorteilhaft daran ist, dass durch die Detektion der Verriegelungsabsicht Fehlalarme vermieden werden können. Denn liegt keine Verriegelungsabsicht vor, ist es meist unerheblich, ob die Kommunikation zwischen Verriegelungseinheit und der Fernbedienung gestört wird. Ein Warnsignal braucht dann in der Regel nicht erzeugt zu werden.

Besteht auf der anderen Seite eine Verriegelungsabsicht des Nutzers, so kann eine Warnung vor Störsignalen und einem eventuell fehlgeschlagenen Verriegelungsvorgang insofern vorteilhaft sein, als dass der Nutzer den Verriegelungsvorgang wiederholen und bewusst überwachen kann. Bei einer Warnung würde er normalerweise nicht das zu verriegelnde Objekt in dem Glauben, es verriegelt zu haben, unverriegelt zurücklassen.

In zumindest einigen Ausführungsbeispielen kann das Detektieren der Störsignale ein Bestimmen der Leistung von empfangenen Signalen umfassen. Liegt bei einem empfangenen Signal dessen Leistung über einem vorher festgelegten Grenzwert, so kann dieses Signal als Störer klassifiziert werden. In Reaktion auf den so detektierten Störer kann ein Warnsignal erzeugt werden. Ein Vorteil hieran kann sein, dass nur bei Störsignalen, welche durch eine hohe Leistung tatsächlich die Kommunikation zwischen der Verriegelungseinheit und der Fernbedienung beinträchtigen können, eine Warnung erzeugt wird. Bei Störsignalen geringer Leistung, welche häufig die Kommunikation nicht beeinträchtigen können, wird keine Warnung erzeugt und ein Fehlalarm somit vermieden.

In manchen Implementierungsbeispielen kann das Detektieren der Störsignale ein Bestimmen einer empfangenen Störleistung, das heißt der Leistung von Störsignalen, in wenigstens zwei Funkkanälen umfassen, welche für die Kommunikation zwischen der fernbedienbaren Verriegelungseinheit und der dazu korrespondierenden Fernbedienung verfügbar sind. Als Funkkanal werde hier ein Frequenzbereich bezeichnet, in dem ein Funksignal einer bestimmten Bandbreite übertragen werden kann. In den verschiedenen Funkkanälen kann die Störleistung unterschiedlich hoch sein. Für die Kommunikation zwischen der Verriegelungseinheit und der Fernbedienung kann dann der Funkkanal ausgewählt werden, in welchem die Störleistung am geringsten ist. Ein Vorteil hieran kann sein, dass durch Auswahl eines wenig oder nicht gestörten Funkkanals die Kommunikation zwischen der Verriegelungseinheit und der Fernbedienung ohne Übertragungsfehler möglich sein kann. Starke Störsignale können somit umgangen werden. Ein Verriegelungsvorgang kann dann erfolgreich durchgeführt werden, so dass ein Warnen des Nutzers und weitere unter Umständen aufwendige Maßnahmen zum Verriegeln entfallen können.

Außerdem kann in einigen Ausführungsbeispielen zusätzlich oder alternativ zu der Detektion von Störsignalen eine Authentifizierung einer mit der Verriegelungseinheit korrespondierenden Fernbedienung dahin gehend überprüft werden, ob diese erfolgt oder nicht erfolgt ist. Erfolgt, nachdem eine Verriegelungsabsicht detektiert wurde, nach einer vorher festgelegten Zeit keine Authentifizierung der Fernbedienung, so kann darauf geschlossen werden, dass die Kommunikation zwischen der Verriegelungseinheit und der Fernbedienung gestört wurde und somit keine Verriegelung erfolgt ist. Infolgedessen kann ein Warnsignal erzeugt werden. Ein Vorteil hieran kann sein, dass, indem nur bewertet wird, ob die Kommunikation ungestört, das heißt, die Authentifizierung der Fernbedienung erfolgreich stattgefunden hat oder ausgeblieben ist, auf Annahmen über Eigenschaften von Störsignalen, wie deren Leistung oder deren Zeitdauer, verzichtet werden kann. Außerdem kann vorteilhaft sein, dass nicht nur ein ausgebliebenes Verriegeln infolge die Kommunikation beeinträchtigender Störsignale erkannt und davor gewarnt wird, sondern auch ein aus anderen Gründen ausgebliebenes Verriegeln, zum Beispiel infolge einer ungewöhnlich hohen Funkübertragungsdämpfung zwischen Fernbedienung und Verriegelungseinheit, eines technischen Defektes an der Verriegelungseinheit oder der Fernbedienung oder einer zur Neige gehenden Batterie der Fernbedienung.

In manchen Ausführungsbeispielen kann das Detektieren der Verriegelungsabsicht eine Auswertung eines Kontakt- und/oder Näherungssensors des zu verriegelnden Objekts umfassen. Kontaktsensoren können dabei zum Beispiel auf einem resistiven Wirkprinzip beruhen, Näherungssensoren zum Beispiel auf einem kapazitiven oder optischen Wirkprinzip. Vorteilhaft am Einsatz solcher Sensoren kann sein, dass sie ein für eine Verriegelungsabsicht des Nutzers charakteristisches Verhalten und damit die Verriegelungsabsicht selbst detektieren können. Beispielsweise können sich Kontaktsensoren in der Fahrertür und im Fahrersitz eines Kfz befinden, mit denen ein Öffnen der Fahrertür und ein Erheben des Fahrers aus dem Sitz vor einem Aussteigen detektiert werden kann. Da der Fahrer häufig nach dem Aussteigen das Kfz über die Fernbedienung verriegeln möchte, kann über das Öffnen der Fahrertür und das Erheben aus dem Sitz auf die Verriegelungsabsicht des Fahrers geschlossen werden. Während der Fahrer sich noch aus dem Sitz erhebt und damit seine Verriegelungsabsicht detektiert werden kann, kann bereits die Detektion von Störsignalen durchgeführt werden. Falls solche detektiert werden, kann der Fahrer gewarnt werden, solange er sich noch im Fahrzeug befindet, zum Beispiel durch Ausgabe eines Warntons und/oder einer Meldung auf zum Beispiel einem einem Bordcomputer, Navigations- oder Infotainmentsystem des Kfz zugeordneten Display. Dies kann den Vorteil haben, dass das Warnsignal neben eventuell weiteren Personen im Kfz nur den Fahrer erreicht und keine anderen Personen oder Verkehrsteilnehmer außerhalb des Kfz gestört oder irritiert werden könnten.

Ferner können zum Beispiel bei einem Kfz Kontakt- und/oder Näherungssensoren auch außerhalb des Kfz angebracht sein, über welche die Verriegelungsabsicht des Nutzers detektiert werden kann. Daran kann vorteilhaft sein, dass der Nutzer nach dem Aussteigen diese komfortabel aktivieren kann, zum Beispiel durch Annäherung mit einer Hand an einen in einem Türgriff vorgesehenen Näherungssensor, um seine Verriegelungsabsicht unmissverständlich der Verriegelungseinheit mitzuteilen.

Das Detektieren der Verriegelungsabsicht kann in einigen Beispielen für Implementierungen der vorliegenden Erfindung eine Detektion seitens der Verriegelungseinheit umfassen. Ein Vorteil hiervon kann sein, dass an der Verriegelungseinheit mehr Energie zur Versorgung der für die Detektion erforderlichen Sensoren beziehungsweise Detektoren zur Verfügung steht als auf der Seite der Fernbedienung, welche oft batteriebetrieben ist. Außerdem kann daran vorteilhaft sein, dass die Kenntnis über die Verriegelungsabsicht bereits an der Verriegelungseinheit vorliegt, was notwendig ist, um bei einer anschließenden Detektion von Störsignalen ein Warnsignal seitens der Verriegelungseinheit zu erzeugen. Die Verriegelungseinheit braucht so meist nicht mehr über die Verriegelungsabsicht zum Beispiel durch eine drahtlose und daher möglicherweise gestörte Nachrichtenübertragung in Kenntnis gesetzt zu werden.

In manchen Ausführungsbeispielen kann das Detektieren der Störsignale deren Detektion seitens der Verriegelungseinheit umfassen. Dies kann den Vorteil haben, dass ein bereits in der Verriegelungseinheit vorhandener Empfänger, welcher für den Empfang von der Fernbedienung gesendeter Signale vorgesehen ist, die in ihn gelangende Störleistung genau detektieren kann. Mit einer genauen Kenntnis der in den Empfänger gelangenden Störleistung, kann auch meist eine sichere Entscheidung darüber gefällt werden, ob diese Störleistung den Empfang und die Auswertung der von der Fernbedienung gesendeten Signale beeinträchtigt oder nicht. Auch kann wiederum vorteilhaft sein, dass die Kenntnis über das Vorhandensein von Störsignalen bereits an der Verriegelungseinheit vorliegt, sofern seitens der Verriegelungseinheit ein Warnsignal zu erzeugen ist.

Außerdem kann in einigen möglichen Implementierungsformen das Erzeugen des Warnsignals dessen Erzeugung seitens der Verriegelungseinheit umfassen. Vorteilhaft hieran kann sein, dass auf Seite der Verriegelungseinheit oft bereits Vorrichtungen vorhanden sind, welche zur Erzeugung des Warnsignals verwendet werden können, und dass diese für den zu warnenden Nutzer gut wahrnehmbar sein können. Zum Beispiel kann eine bereits in einem Kfz vorhandene Hupe genutzt werden, um ein lautes, vom Nutzer hörbares Warnsignal auszugeben. Alternativ oder zusätzlich können weitere Ton- oder Spracherzeugungseinrichtungen oder Anzeigegeräte genutzt werden, um ein akustisches Warnsignal, eine gesprochene Warnmeldung oder einen Warnhinweis in Text- oder Bildform auf einem Anzeigegerät seitens der Verriegelungseinheit zu erzeugen. Als Anzeigegerät kann in einem Kfz zum Beispiel ein Display eines Infotainmentsystems, eines Navigationssystems oder eines Bordcomputers genutzt werden. Ferner können in manchen Ausführungsbeispielen Leuchtanzeigen beziehungsweise Leuchtmittel zur Erzeugung eines Warnsignals eingesetzt werden, bei einem Kfz zum Beispiel Scheinwerfer, Nebelscheinwerfer, Rücklichter, Bremslichter, Nebelschlussleuchten oder Warnblinkanlagen, und/oder im äußeren Bereich des Kfz extra vorgesehene Leuchtanzeigen, wie zum Beispiel in den Türgriffen installierte Leuchtdioden.

Alternativ oder zusätzlich kann in einigen Ausführungsbeispielen das Detektieren der Störsignale deren Detektion seitens der Fernbedienung umfassen. Vorteilhaft hieran kann sein, dass die Fernbedienung selber Kenntnis davon erlangt, dass die Kommunikation zwischen ihr und der Verriegelungseinheit gestört ist, und nicht von der Verriegelungseinheit darüber benachrichtigt zu werden braucht, zumal eine solche Benachrichtigung gerade infolge der gestörten Kommunikation oft schwer durchführbar sein kann. Da in manchen Ausführungsbeispielen das Erzeugen des Warnsignals dessen Erzeugung seitens der Fernbedienung umfassen kann, kann dann die Fernbedienung entweder aus sich selbst heraus, da sie selbst die Störsignale auch detektiert hat, oder nach einer Benachrichtigung durch die Verriegelungseinheit ein Warnsignal erzeugen. Da der Nutzer die Fernbedienung oft in der Hand hält oder sie dicht am Körper trägt, kann er zum Beispiel ein von der Fernbedienung erzeugtes haptisches Warnsignal, insbesondere einen Vibrationsalarm, gut wahrnehmen.

Im Falle einer Benachrichtigung der Fernbedienung über die gestörte Kommunikation können in einigen Ausführungsbeispielen für eine dazu von der Verriegelungseinheit zur Fernbedienung zu übertragende, dem Warnsignal zugeordnete Nachricht ein oder mehrere Funkkanäle genutzt werden. Die Funkkanäle können dabei in verschiedenen Frequenzbändern, zum Beispiel in niedrigen Frequenzbändern (kurz NF-Bänder) beispielsweise um 20 kHz, 120 kHz und oder 130 kHz, und/oder in hohen Frequenzbändern (kurz HF-Bänder) beispielsweise um 433 MHz, 868 MHz und/oder 915 MHz, angeordnet sein. Ein Vorteil der Nutzung mehrerer Funkkanäle kann dabei sein, dass die Übertragung robuster, das heißt weniger störanfällig, gegenüber Störsignalen werden kann, welche auch einen der Fernbedienung zugeordneten Empfänger betreffen können. Darüber hinaus kann in einigen Ausführungsbeispielen die Verriegelungseinheit so ausgebildet sein, dass sie die Störleistung in den verschiedenen Funkkanälen bestimmen und einen oder mehrere Funkkanäle mit einer minimalen oder geringen Störleistung zur Benachrichtigung der Fernbedienung über die gestörte Kommunikation nutzen kann.

Das Erzeugen des Warnsignals kann in manchen beispielhaften Implementierungen zusätzlich oder alternativ auf einem mobilen Endgerät, zum Beispiel auf einem Mobiltelefon, einem Smartphone, einem Tablet-Computer oder einem Laptop, erfolgen. Das Erzeugen der Warnung kann dabei durch eine von der Verriegelungseinheit oder der Fernbedienung an das mobile Endgerät übertragene Nachricht ausgelöst werden. Die Übertragung der Nachricht kann dabei über eine drahtlose Kommunikationsverbindung, zum Beispiel über Bluetooth, ein drahtloses lokales Netzwerk (englisch Wireless Local Area Network, WLAN) oder eine Mobilfunkverbindung erfolgen. Vorteilhaft hieran kann sein, dass das erzeugte Warnsignal für den Nutzer besser wahrnehmbar sein kann, da der Nutzer häufig das mobile Endgerät dicht bei sich trägt und es so eingestellt hat, dass er von diesem beispielhaft ausgehende akustische oder haptische Signale gut hören beziehungsweise fühlen kann. Verfügt das mobile Endgerät über eine Anzeigeeinrichtung, so kann auf dieser zum Beispiel auch eine Warnungsmeldung in Text- oder Bildform erzeugt werden. Erfolgt die Erzeugung des Warnsignals auf dem mobilen Endgerät alternativ zu der Erzeugung in der Fernbedienung, kann vorteilhaft hieran sein, dass der Energiebedarf der Fernbedienung, der vor allem hoch bei der Erzeugung haptischer oder lauter akustischer Signale sein kann, gesenkt und somit die Entladung ihrer Batterie verlangsamt werden kann. Der dafür erhöhte Energiebedarf auf dem mobilen Endgerät kann oft eher in Kauf genommen werden, da dieses oft über einen wiederaufladbaren Akku hoher Ladungskapazität verfügt und der Energieverbrauch durch die Erzeugung eines Warnsignals oft gegenüber anderen häufig genutzten Funktionen des mobilen Endgeräts gering sein kann.

In einigen Ausführungsbeispielen kann die hier beschriebene Verriegelungseinheit von einem Kfz umfasst sein. Dies kann vor allem vorteilhaft sein, um Kfz mit fernbedienbaren Verriegelungseinheiten vor Missbrauch zu schützen.

Gemäß einem weiteren Aspekt der vorliegend Erfindung, schaffen Ausführungsbeispiele ferner eine Vorrichtung zur Erkennung einer Manipulation einer Kommunikation zwischen einer fernbedienbaren Verriegelungseinheit und einer dazu korrespondierenden Fernbedienung. Diese Vorrichtung umfasst wenigstens eine Einrichtung zum Detektieren einer Verriegelungsabsicht. Ferner umfasst sie eine Einrichtung zum Detektieren von die Kommunikation beeinträchtigenden Störsignalen, die aktiv wird, falls eine Verriegelungsabsicht detektiert wurde, und eine Einrichtung zum Erzeugen eines Warnsignals, wobei das Warnsignal erzeugt wird, falls Störsignale detektiert wurden.

In einigen Ausführungsbeispielen kann diese Vorrichtung von einem Kfz umfasst sein.

Darüber hinaus kann in manchen möglichen Implementierungsformen ein PK-System, insbesondere das eines Kfz, die oben beschriebene Vorrichtung umfassen. Vorteilhaft hieran kann sein, dass so Kfz, welche zur Verriegelung ein PK-System nutzen, vor Missbrauch geschützt werden können. Zudem erfahren PK-Systeme derzeit im Kfz-Bereich eine zunehmende Verbreitung. Da ein Nutzer eines Kfz mit einem PK-Systems die korrespondierende Fernbedienung, das heißt, den authentifizierbaren Schlüssel, nicht in die Hand zu nehmen braucht, sondern diesen nur mit sich führen muss, wird ihm ein hoher Bedienkomfort geboten. So kann das PK-System eines Kfz zum Beispiel an einen elektrohydraulischen Antrieb einer Heckklappe des Kfz gekoppelt sein, welche sich dann automatisch entriegeln und öffnen kann, wenn sich der Nutzer zum Beispiel mit einer mit dem Kfz zu transportierenden Last in seinen Händen nähert. Dadurch braucht der Nutzer oft die Last nicht abzusetzen, um selbst das Kfz zu öffnen, und die Last damit nicht erneut zu heben.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Figur 1: ein Blockdiagramm zur Illustration einer Manipulation einer Kommunikation zwischen einer fernbedienbaren Verriegelungseinheit und einer dazu korrespondierenden Fernbedienung;
- Figur 2: ein Blockdiagramm eines Ausführungsbeispiels eines PK-Systems mit einer Vorrichtung zur Erkennung einer Manipulation zwischen einer fernbedienbaren Zentralverriegelung eines Kfz und einem authentifizierbaren Schlüssel;
- Figur 3: ein Blockdiagramm eines weiteren Ausführungsbeispiels eines PK-Systems mit einer Vorrichtung zur Erkennung einer Manipulation zwischen einer fernbedienbaren Zentralverriegelung eines Kfz und einem authentifizierbaren Schlüssel;
- Figur 4: ein Flussdiagramm eines Ausführungsbeispiels eines Verfahrens zur Erkennung einer Manipulation einer Kommunikation zwischen einer fernbedienbaren Verriegelungseinheit und einer dazu korrespondierenden Fernbedienung.

Verschiedene Ausführungsbeispiele werden nun ausführlicher unter Bezugnahme auf die beiliegenden Zeichnungen beschrieben, in denen einige Ausführungsbeispiele dargestellt sind.

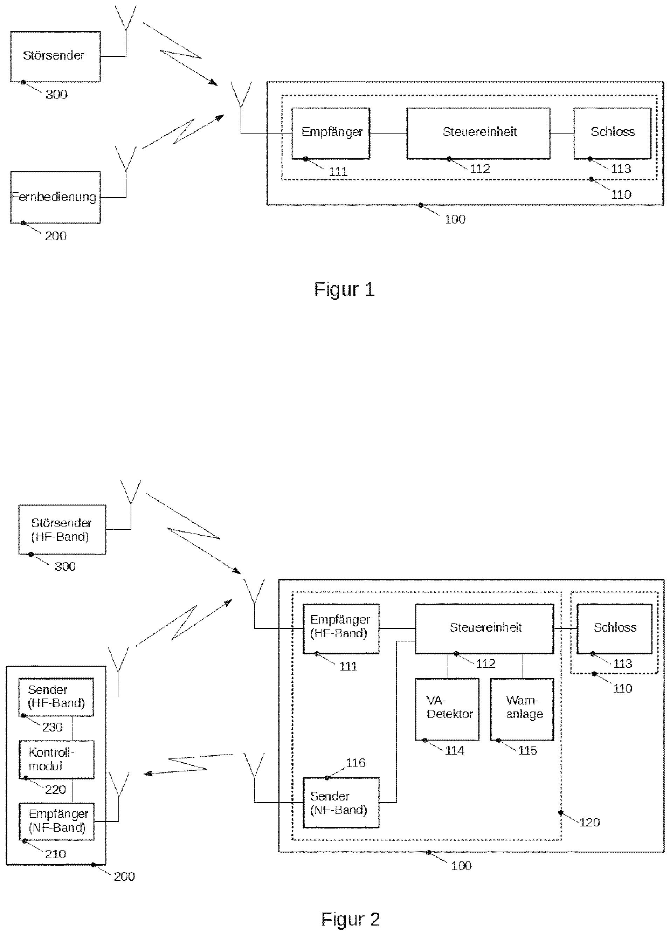

Einführend stellt Figur 1 eine Manipulation einer Kommunikation zwischen einer fernbedienbaren Verriegelungseinheit 110 und einer zu dieser korrespondierenden Fernbedienung 200 dar. Die fernbedienbare Verriegelungseinheit 110 ist dabei in dem zu verriegelnden Objekt 100 installiert. Sie umfasst einen Empfänger 111 für Funksignale, eine Steuereinheit 112, welche in empfangenen Signalen enthaltene Codes zum Ver- oder Entriegeln authentifizieren beziehungsweise eine Authentifizierung verweigern kann, und ein Schloss 113, welches von der Steuereinheit 112 ver- und entriegelt werden kann. Ohne Beschränkung der Allgemeinheit handele es sich bei dem zu verriegelnden Objekt 100 um ein Kfz 100, bei der fernbedienbaren Verriegelungseinheit 110 um eine Zentralverriegelung 110 des Kfz 100 und bei der korrespondierenden Fernbedienung 200 um einen von der Steuereinheit 112 authentifizierbaren Schlüssel 200. Bei der Kommunikationsverbindung zwischen der Zentralverriegelung 110 und dem authentifizierbaren Schlüssel 200 handele es sich um eine Funkverbindung.

Ein Dritter kann nun einen Störsender 300 nutzen, mit welchem er beispielsweise kontinuierlich ein leistungsstarkes Störsignal erzeugen und dieses über eine an den Störsender 300 angebrachte Antenne abstrahlen kann. Dieses Störsignal kann an eine Antenne, welche an den Empfänger 111 der Zentralverriegelung 110 für den Empfang von Signalen des authentifizierbaren Schlüssels 200 vorgesehen ist, gelangen. Beispielsweise kann der Dritte den Störsender 300 einschalten, wenn er zum Beispiel ein Kfz 100 in einen Parkplatz einparken sieht. Der Dritte kann nun warten, bis der Nutzer das Kfz 100 verlassen hat, es mit Hilfe seines authentifizierbaren Schlüssels 200 versucht hat zu verriegeln und es danach unbeaufsichtigt zurückgelassen hat. Danach kann der Dritte den Störsender 300 wieder abschalten. Beim Versuch des Nutzers, das Kfz 100 beziehungsweise dessen Zentralverriegelung 110, zum Beispiel in Form eines RKE-Systems, durch Betätigung seines authentifizierbaren Schlüssels 200 zu verriegeln, sendet der authentifizierbare Schlüssel 200 ein Signal, welches einen Code zum Verriegeln überträgt, an den Empfänger 111. An der der Zentralverriegelung 110 zugeordneten Antenne kann sich diesem Signal das Störsignal überlagern. Oft kann der Störsender 300 so ausgebildet sein, dass das erzeugte Störsignal in den von dem Empfänger 111 und dem authentifizierbaren Schlüssel 200 genutzten Funkkanal fällt oder dass das Störsignal eine so große Bandbreite hat, dass es den Funkkanal vollständig abdeckt.

Betrachtet man das Signal, welches den Verriegelungscode überträgt, als Nutzsignal, so kann das vom Störsender 300 emittierte leistungsstarke Störsignal das Signal-zu-Interferenz-und-Rausch-Verhältnis (englisch Signal-to-Interference-plus-Noise-Ratio, kurz SINR) beim Empfang an der Zentralverriegelung 110 derart absenken, dass nach einer Demodulation das Nutzsignal Bitfehler enthalten kann. Der im Nutzsignal enthaltene Verriegelungscode kann dann durch die entstandenen Bitfehler so verfälscht sein, dass er auch bei Einsatz von Fehlerkorrekturverfahren von der Steuereinheit 112 nicht wiederhergestellt und somit von dieser nicht authentifiziert werden kann, wenn die Steuereinheit 112 ihn überhaupt noch als Verriegelungscode erkennen kann. Eine nahe Position des Störsenders am Kfz kann dabei die Verringerung des SINR am Empfänger 111 der Zentralverriegelung 110 begünstigen. Infolgedessen kann das Kfz 100 nicht verriegelt sein. Kann der Nutzer dies nicht bemerken und hinterlässt er daher das Kfz 100 unverriegelt und unbeaufsichtigt, kann dies von dem Dritten genutzt werden, um auf das Kfz 100 zuzugreifen.

Zur Vorbeugung einer solchen Situation zeigt Figur 2 ein mögliches Ausführungsbeispiel einer Vorrichtung 120 zur Erkennung einer Manipulation einer Kommunikation zwischen einer ferngesteuerten Verriegelungseinheit 110 und einer zu dieser korrespondierenden Fernbedienung 200. Ohne Beschränkung der Allgemeinheit handele es sich in diesem Ausführungsbeispiel bei dem zu verriegelnden Objekt 100 wieder um ein Kfz 100, bei der fernbedienbaren Verriegelungseinheit 110 um eine fernbedienbare Zentralverriegelung 110 des Kfz 100 und bei der korrespondierenden Fernbedienung 200 um einen authentifizierbaren Schlüssel 200. Die Vorrichtung 120 kann dabei einige Funktionen der fernbedienbaren Zentralverriegelung 110, insbesondere den Empfänger 111 sowie die Steuereinheit 112, übernehmen. Das Schloss 113 werde von der Zentralverriegelung 110 umfasst. Darüber hinaus sei das hier beispielhaft betrachtete Verriegelungssystem, bestehend aus der Vorrichtung 120, der Zentralverriegelung 110 und dem authentifizierbaren Schlüssel 200, ein PK-System.

Die Kommunikation zwischen dem authentifizierbaren Schlüssel 200 und der Zentralverriegelung 110 kann dabei über zwei Funkverbindungen erfolgen, wobei die erste Funkverbindung häufig in einem NF-Band, zum Beispiel im Bereich zwischen 120 kHz und 130 kHz, und die zweite Funkverbindung in einem HF-Band, oft in Industriellen-Wissenschaftlichen-Medizinischen-Bändern (englisch Industrial, Scientific and Medical Bands, ISM-Bänder) oder in Short-Range-Device-Bändern (englisch für Geräte mit kurzer Reichweite, kurz SRD-Bänder), wie zum Beispiel bei 433 MHz, 868 MHz oder 915 MHz, arbeitet. Auf der Seite des Kfz 100 können als Schnittstellen zu diesen Funkverbindungen der Empfänger 111 für das HF-Band und der Sender 116 für das NF-Band dienen. Entsprechend kann der authentifizierbare Schlüssel einen Sender 230 für das HF-Band und einen Empfänger 210 für das NF-Band umfassen.

Die Einrichtung 114 sei so ausgebildet, dass sie eine Verriegelungsabsicht eines Nutzers des Kfz 100 detektieren kann und werde im Folgenden als Verriegelungsabsicht-Detektor, kurz VA-Detektor, bezeichnet.
In einigen Ausführungsbeispielen, vor allem bei PK-Systemen eines Kfz 100, kann ein VA-Detektor 114 zum Beispiel in den Türgriffen des Kfz 100 angeordnete Näherungssensoren oder Kontaktsensoren umfassen. Ist der Nutzer aus dem Kfz 100 ausgestiegen, so kann er über eine Annäherung oder einen Kontakt zum Beispiel mit einer Hand an den Näherungssensor beziehungsweise mit dem Kontaktsensor eine Verriegelungsabsicht äußern.

Darüber hinaus kann in einigen Ausführungsbeispielen die Verriegelungsabsicht beispielsweise dadurch detektiert werden, dass der Nutzer eine Fahrertür des Kfz 100 öffnet und durch das Öffnen der Fahrertür ein Kontaktsensor angesprochen wird, welcher zum Beispiel einen Kontaktverlust zwischen Fahrertür und Karosserie des Kfz 100 registrieren kann. Zusätzlich zum Öffnen der Fahrertür kann ein sich anschließendes Erheben des Nutzers aus einem Fahrersitz des Kfz 100 über einen weiteren Kontaktsensor detektiert werden. Das Öffnen der Fahrertür verbunden mit einem anschließenden Erheben des Nutzers aus dem Fahrersitz kann damit, insbesondere in dieser Reihenfolge, detektiert werden und als eine Verriegelungsabsicht interpretiert werden, da diese Vorgänge typisch für ein Verlassen des Kfz sind und nach einem Verlassen der Nutzer häufig die Absicht hat, das Kfz 100 zu verriegeln.

Der VA-Detektor 114 kann eine detektierte Verriegelungsabsicht der Steuereinheit 112 signalisieren. Nachdem die Steuereinheit 112 nun Kenntnis davon hat, dass das Fahrzeug verriegelt werden soll, kann sie einen Befehl an den Sender 116 schicken, so dass dieser eine Schlüssellokalisation einleitet. Oft ist es Ziel der Schlüssellokalisation, in der Nähe befindliche authentifizierbare Schlüssel, sogenannte angelernte Schlüssel, dazu anzuregen, ihrerseits einen Verriegelungscode im HF-Band zu senden, und die Positionen der authentifizierbaren Schlüssel, insbesondere ob sie sich im oder außerhalb des Fahrzeugs befinden, zu bestimmen. Dazu kann der Sender 116 ein NF-Signal emittieren, welches einen Aufweckcode zur Aktivierung authentifizierbarer Schlüssel übertragen kann. Sowohl authentifizierbare als auch nicht authentifizierbare Schlüssel können das NF-Signal über einen Empfänger 210 empfangen und den Aufweckcode in einem Kontrollmodul 220 auswerten. Anhand des Aufweckcodes kann das Kontrollmodul 220 erkennen, ob es sich bei dem ihm zugeordneten Schlüssel, um einen von der Zentralverriegelung 110 authentifizierbaren oder nicht authentifizierbaren Schlüssel handelt. Ist Ersteres der Fall veranlasst das Kontrollmodul 220 den Sender 230 im HF-Band einen Verriegelungscode an den Empfänger 111 im Kfz 100 zu senden. Ist Letzteres der Fall, so wird kein Verriegelungscode vom Sender 230 gesendet, was den Vorteil haben kann, dass der batteriebetriebene Schlüssel Energie spart und vor allem keine unnötigen und unerwünschten Interferenzen mit HF-Signalen authentifizierbarer Schlüssel an einer Antenne des Empfängers 111 verursacht werden. Ein Vorteil, Aufweckcodes im NF-Band an Schlüssel zu übertragen, kann darin bestehen, dass so Schlüssel kontinuierlich zum Empfang solcher Aufwecksignale bereit sein können und dazu weniger Energie verbrauchen als zum Beispiel bei einem Empfang in einem HF-Band. Mit anderen Worten, ein dauerhaft aktiver Empfänger im NF-Band kann einen geringeren Energiebedarf haben als zum Beispiel ein dauerhaft aktiver Empfänger im HF-Band.

Liegen an der Antenne des Empfängers 111 keine Störsignale eines Störsenders 300 vor, so kann der Empfänger 111 einen Verriegelungscode des authentifizierbaren Schlüssels 200 meist fehlerfrei empfangen. Zum Beispiel kann der Empfänger 111 den empfangenen Verriegelungscode in Form von Bits darstellen und als Datenwort an die Steuereinheit 112 weiterleiten. Die Steuereinheit 112 kann den Verriegelungscode überprüfen und authentifiziert diesen, da er von einem authentifizierbaren Schlüssel gesendet wurde. Da zur Verriegelung des Kfz 100 nun zwei Bedingungen, welche von der Steuereinheit 112 abzuprüfen sein können, erfüllt sind, das sind das Vorliegen einer Verriegelungsabsicht und eines authentifizierbaren Verriegelungscodes, schickt die Steuereinheit 112 einen Verriegelungsbefehl, zum Beispiel in Form eines elektrischen, drahtgebundenen Signals, an das Schloss 113, welches infolgedessen das Kfz 100 verriegelt.

Liegen andererseits an der Antenne des Empfängers 111 Störsignale eines Störsenders 300 vor, so können diese mit dem vom Sender 230 gesendeten, authentifizierbaren Verriegelungscode interferieren. Die interferenzbedingten Störungen können sich in das von dem Empfänger 111 an die Steuereinheit 112 übermittelte Datenwort in Form von Bitfehlern abbilden. Eine im Vergleich zur Leistung des HF-Signals des Sender 230 hohe Leistung begünstigt das Entstehen von Bitfehlern, so dass der Störsender 300 häufig so ausgebildet sein kann, dass er Störsignale hoher Leistung erzeugen und senden kann. Aufgrund der Bitfehler kann nun die Steuereinheit den ehemals authentifizierbaren Verriegelungscode nicht mehr als solchen erkennen und diesen somit nicht authentifizieren. Jetzt liegt nur eine Verriegelungsabsicht an der Steuereinheit 112 vor, die Bedingung des Vorliegens eines authentifizierbaren Verriegelungscodes ist hingegen nicht erfüllt und folglich kann die Steuereinheit 112 keinen Verriegelungsbefehl an das Schloss 113 übermitteln, so dass das Kfz 100 unverriegelt bleibt.

Um das Vorliegen von Störsignalen feststellen zu können und um den Nutzer des Kfz 100 davor zu warnen, dass das Kfz 100 infolgedessen möglicherweise nicht durch den authentifizierbaren Schlüssel verriegelt wurde oder nicht verriegelt werden kann, kann der Empfänger 111 so ausgebildet sein, dass er einen Empfang von Störsignalen von einem Empfang von Verriegelungscodes übertragenden HF-Signalen unterscheiden kann. Sofern er ein Störsignal detektiert, benachrichtigt er die Steuereinheit 112 darüber, dass der Empfang gestört ist und anzunehmen ist, dass Verriegelungscodes nur fehlerbehaftet empfangen werden können. An der Steuereinheit 112 können jetzt folgende zwei Bedingungen erfüllt sein: Es liegt eine Verriegelungsabsicht vor und es wurden Störsignale detektiert, welche einen Empfang eines authentifizierbaren Verriegelungscodes und damit eine Verriegelung verhindern.

Infolge der Erfüllung dieser beiden Bedingungen kann die Steuereinheit 112 an Einrichtung 115, welche zur Erzeugung eines Warnsignals ausgeprägt ist und im Folgenden als Warnanlage 115 bezeichnet werde, einen Befehl zur Erzeugung eines Warnsignals übermitteln. Demzufolge gibt die Warnanlage 115 ein Warnsignal aus, um den Nutzer zu alarmieren, dass entgegen seiner Verriegelungsabsicht das Kfz 100 infolge einer gestörten beziehungsweise manipulierten Kommunikation mit dem authentifizierbaren Schlüssel nicht verriegelt werden kann oder nicht verriegelt wurde.

Ob die Kommunikation zwischen dem Sender 230 und dem Empfänger 111 dabei zum Beispiel gezielt durch den Störsender 300 eines Dritten manipuliert wurde oder ob der Störsender 300 unbeabsichtigt diese stört, zum Beispiel könnte es sich auch bei dem Störsender um einen Funksender mit starken Nebenaussendungen in dem für die Kommunikation zwischen dem Sender 230 und dem Empfänger 111 genutzten Funkkanal handeln, kann für den Nutzer des Kfz 100 meist unerheblich sein. Wichtig kann es hingegen für den Nutzer sein, in jedem Fall darauf hingewiesen zu werden, dass sich das Kfz 100 infolge der gestörten Kommunikation nicht verriegeln lässt, wenn der Nutzer dies beabsichtigt.

Zur Unterscheidung zwischen Störsignalen und Verriegelungscodes transportierenden HF-Signalen kann der Empfänger 111 zum Beispiel die Leistung eines empfangenen Signals an seinem Eingang beziehungsweise die Feldstärke des Signals an der dem Empfänger zugeordneten Antenne auswerten. Der Empfänger 111 kann zum Beispiel so aufgebaut sein, dass er hinter einem Bandpassfilter an seinem Eingang, welches nur den Empfang von Signalen in dem für die Kommunikation zwischen dem Sender 230 und dem Empfänger 111 genutzten Frequenzband zulässt, über einen Pegeldetektor verfügt. Ein solcher Pegeldetektor kann zum Beispiel einen Richtkoppler und eine Diode als Einhüllendendetektor umfassen. Der Richtkoppler kann dabei in einem festen, bekannten Verhältnis einen Anteil des empfangenen Signals auskoppeln, so dass der ausgekoppelte Signalanteil zum Einhüllendendetektor gelangt, der übrige Signalanteil gelangt zur weiteren Verarbeitung, insbesondere zur Demodulation, weiter in den Empfänger hinein. Der Einhüllendendetektor kann eine elektrische Spannung proportional zur momentanen Leistung einer Einhüllenden des empfangenen Signals liefern. Diese Spannung kann gegen einen oberen Grenzwert verglichen werden, bei dem es sich um eine obere Detektionsschwelle für Störsignale handeln kann. Diese Detektionsschwelle kann zum Beispiel so gewählt werden, dass sie einer von dem Empfänger 111 an seinem Eingang maximal verarbeitbaren Leistung entspricht. Die maximal verarbeitbare Leistung kann sich dabei danach bestimmen, welcher Grad von Übersteuerung des Empfängers, zum Beispiel ausgedrückt durch einen beim Empfang mindestens einzuhaltenden Intermodulationsabstand, noch zugelassen werden kann. Eine andere Möglichkeit die Detektionsschwelle zu wählen, kann darin bestehen, sie auf einen Wert entsprechend der Sendeleistung des Senders 230 festzulegen. Alternativ könnte die Detektionsschwelle auch so festgelegt werden, dass sie einer Leistung entspricht, die etwas, zum Beispiel 10 Dezibel, oberhalb der typischen Empfangsleistung eines HF-Signals eines authentifizierbaren Schlüssels 200 liegt.

Da die Leistung von Störsignalen meist die Leistung von Verriegelungscodes transportierenden HF-Signalen deutlich übersteigt, insbesondere in Fällen einer beabsichtigten Manipulation, da Dritte die Kommunikation zwischen der Verriegelungseinheit und dem authentifizierbaren Schlüssel zuverlässig stören möchten, kann der Empfänger 111 ein Signal, dessen Leistung die Detektionsschwelle für Störsignale überschreitet, als Störsignal detektieren und klassifizieren und damit die Steuereinheit 112 darüber benachrichtigen, dass der Empfang von Verriegelungscodes transportierenden HF-Signalen gestört ist.

Auch kann der Empfänger 111 weitere oder alternative Kriterien zur Detektion von Störsignalen überprüfen. Zusätzlich zur Leistung kann er zum Beispiel eine Signaldauer eines empfangenen Signals bestimmen. Störsignale sind meistens durch eine lange Signaldauer gekennzeichnet, da zum Beispiel der Dritte den Störsender 300 einschaltet, bevor der Nutzer das Kfz 100 verlassen hat und diesen erst wieder ausschaltet, nachdem der Nutzer versucht hat, das Kfz 100 zu verriegeln und sich vom Kfz 100 entfernt hat. Verriegelungscodes transportierende HF-Signale können meist höchstens so lange sein, wie ein Verriegelungsvorgang des Kfz 100, bei dem neben dem Verriegeln von Türen auch Fenster und Schiebedächer geschlossen werden können, in Anspruch nimmt. Dies sind häufig acht Sekunden. Dauer ein Signal länger als diese Zeitdauer an, so kann es Störsignal klassifiziert werden.

Da ein Dritter darauf spekulieren kann, dass die Vorrichtung 120 nur Signale, deren Leistung die oben beschriebene Detektionsschwelle überschreitet, als Störsignale detektieren kann, könnte der Dritte einen Störsender 300 so einstellen, dass die Leistung der Störsignale noch unterhalb der oberen Detektionsschwelle für Störsignale liegt. Sendet der Dritte allerdings ein Störsignal, welches länger als acht Sekunden andauert, so kann dies vom Empfänger 111 erkannt werden und das Signal somit als Störsignal detektiert werden.

Dabei kann der Empfänger 111 die Leistung bei Empfang eines zeitlich ausgedehnten Störsignals alternativ zu der oberen Detektionsschwelle mit einer unteren Detektionsschwelle vergleichen und nur, wenn das empfangene Signal diese untere Detektionsschwelle überschreitet und zeitlich ausgedehnt, zum Beispiel länger als acht Sekunden ist, das Signal als Störsignal detektieren. Die untere Detektionsschwelle kann zum Beispiel so gewählt werden, dass sie etwas, zum Beispiel 10 Dezibel, unterhalb der typischen Empfangsleistung eines HF-Signals eines authentifizierbaren Verriegelungscodes liegt. Durch das zusätzliche Überprüfen dieser unteren Detektionsschwelle kann vermieden werden, dass zeitlich ausgedehnte, leistungsschwache Störsignale, welche meist den Empfang eines HF-Signals eines authentifizierbaren Verriegelungscodes nicht beeinträchtigen können, nicht detektiert werden und somit die Warnanlage 115 kein Warnsignal zu erzeugen braucht. Dies kann helfen, die Fehlalarmrate der Vorrichtung 120 zur reduzieren und damit das Vertrauen des Nutzers in die Vorrichtung 120 stärken.

Als zusätzliches oder alternatives Kriterium zur Erkennung einer Manipulation der Kommunikation zwischen der Verriegelungseinheit 110 und dem authentifizierbaren Schlüssel 200 kann die Vorrichtung 120 ein Ausbleiben eines Empfangs eines authentifizierbaren Verriegelungscodes nach einer bestimmten Zeit nach Detektion einer Verriegelungsabsicht verwenden. Bei dem hier besprochenen Ausführungsbeispiel eines PK-Systems kann der Nutzer eine Verriegelungsabsicht zum Beispiel durch Annäherung an einen Kontaktsensor in einem Türgriff des Kfz 100 äußern. Der nun ausgelöste Vorgang, Aufwecken des authentifizierbaren Schlüssels 200 und Empfang eines Verriegelungscodes am Empfänger 111, kann bis zu etwa einer Sekunde in Anspruch nehmen, wenn diese sicherheitshalber dreimal durchgeführt wird. Kann etwas später, zum Beispiel nach eineinhalb Sekunden, nachdem die Verriegelungsabsicht von der Steuereinheit 112 detektiert wurde, kein Verriegelungscode von dieser authentifiziert werden, so kann die Steuereinheit 112 diesen Umstand so deuten, dass die Kommunikation mit dem authentifizierbaren Schlüssel 200 gestört wurde und über die Warnanlage 115 ein Warnsignal erzeugen lassen. Ein Vorteil hieran kann zum Beispiel sein, dass unabhängig davon, ob die Kommunikation im NF-Band oder, wie meist, im HF-Band gestört wurde, die fehlgeschlagene oder ausgebliebene Übermittelung eines authentifizierbaren Verriegelungscodes detektiert werden kann.

In einigen Ausführungsbeispielen können der Sender 230 und der Empfänger 111 über mehrere, wenigstens zwei Funkkanäle im HF-Band verfügen. Nach Detektion einer Verriegelungsabsicht kann die Steuereinheit 112 den Empfänger 111 dazu veranlassen, die verfügbaren Funkkanäle im HF-Band auf Störsignale zu untersuchen. Dazu kann der Empfänger zum Beispiel an seinem Eingang über ein abstimmbares Bandpassfilter verfügen, dessen Durchlassbereich auf einen zu untersuchenden Funkkanal und dessen Sperrbereich auf die übrigen Funkkanäle eingestellt werden kann. Ein Einhüllendendetektor am Eingang des Empfängers 111 detektiert dann nur eine empfangene Leistung in diesem Funkkanal. Alternativ oder zusätzlich kann eine Leistungsdetektion in einem zu untersuchenden Funkkanal auf einer Zwischenfrequenz (ZF) des Empfängers 111 stattfinden. Auf der ZF kann dazu ein schmalbandiges Bandpassfilter (kurz ZF-Bandpass) realisiert sein. Durch Verstimmen der Frequenz eines Lokaloszillators kann der zu untersuchende Funkkanal über einen Mischer in den Durchlassbereich des ZF-Bandpasses, die übrigen Funkkanäle in seinen Sperrbereich umgesetzt werden. Die Leistung in dem auf die ZF umgesetzten, zu untersuchenden Funkkanal kann dann wiederum über einen Einhüllendendetektor bestimmt werden. Vorteilhaft daran ist, dass ein unter Umständen teures, aufwendig zu realisierendes, durchstimmbares Bandpassfilter am Empfängereingang eingespart werden kann. Ein Vorteil des durchstimmbaren Bandpassfilters am Empfängereingang kann sein, dass dieses bewirkt, dass Störsignale in den übrigen Funkkanälen nicht bis zum Mischer gelangen und somit nicht über Nebenempfangsstellen eine Verfälschung der Detektion der Störleistung im zu untersuchenden Funkkanal bewirken können.

Durch zum Beispiel zeitlich aufeinanderfolgende Leistungsdetektion in allen Funkkanälen, kann zum Beispiel von der Steuereinheit 112 ein Funkkanal bestimmt werden, in dem die detektierte Störleistung im Vergleich zu den anderen Funkkanälen minimal ist. Die Steuereinheit 112 kann dann über den NF-Sender 116 dem authentifizierbaren Schlüssel 200 zum Beispiel bei der Schlüssellokalisation mitteilen, welcher Funkkanal im HF-Band am wenigsten gestört ist. Damit kann sie den authentifizierbaren Schlüssel 200 dazu veranlassen, diesen Funkkanal für die Versendung des Verriegelungscodes zu verwenden. Gleichzeitig kann die Steuereinheit 112 dem Empfänger 111 mitteilen, dass dieser seinen Empfang auf denselben Funkkanal stellt. Ein Vorteil hieran kann sein, dass möglicherweise ein Funkkanal bestimmt werden kann, in dem ein authentifizierbarer Verriegelungscode fehlerfrei empfangen werden kann, so dass die Verriegelung des Kfz 100 mittels des Schlosses 113 erfolgreich durchgeführt werden kann und damit kein Warnsignal erzeugt zu werden braucht. Dies kann dem Nutzer beim Verriegeln des Kfz 100 einen höheren Komfort bieten.

In einigen Ausführungsbeispielen kann die Vorrichtung 120 neben dem Empfänger 111 über einen weiteren Empfänger (nicht in Figur 2 dargestellt) verfügen, welcher speziell dazu ausgebildet sein kann, Störsignale zu detektieren. Zur Unterscheidung vom Empfänger 111 werde dieser im Folgenden als Störsignalempfänger bezeichnet. Dieser Störsignalempfänger kann zum Beispiel an die dem Empfänger 111 zugeordnete Antenne angeschlossen sein oder über eine eigene Antenne verfügen. Er kann zum Beispiel so ausgebildet sein, dass er nicht nur die Leistung von Störsignalen detektieren, sondern Störsignale auch demodulieren kann. Für eine dazu gegenüber dem Empfänger 111 benötigte höhere Aussteuerfestigkeit, welche zum Beispiel durch einen höheren Interceptpunkt dritter Ordnung beschrieben werden kann, kann der Störsignalempfänger zum Beispiel über Dämpfungsglieder an seinem Eingang und/oder über einen aussteuerungsfesteren Vorverstärker als der Empfänger 111 verfügen. Der Störsignalempfänger kann dann parallel zu dem Empfänger 111 arbeiten und empfangene Störsignale durch Demodulation auch in weiteren Eigenschaften untersuchen. Zum Beispiel kann er Störsignale hinsichtlich ihrer Modulationsart, ihrer Bandbreite, ihrer Symboldauer, ihrer Präambel, ihrer Trägerfrequenz und/oder einer ihnen zugeordneten Periodizität untersuchen und auswerten.

In manchen Ausführungsbeispielen kann auch der Empfänger 111 so ausgebildet sein, dass er von Störsignalen meist nicht übersteuert werden kann, so dass er selbst diese demodulieren und zum Beispiel auf die oben genannten Signaleigenschaften analysieren kann.

Kann der Störsignalempfänger beziehungsweise der Empfänger 111 dabei zum Beispiel die Modulationsart eines empfangenen Signals als für Verriegelungscodes übermittelnde HF-Signale untypische Modulationsart feststellen, so kann er dies als ein weiteres Kriterium zur Detektion von Störsignalen verwenden und zuverlässiger Störsignale detektieren und so die Fehlalarmrate verringern.

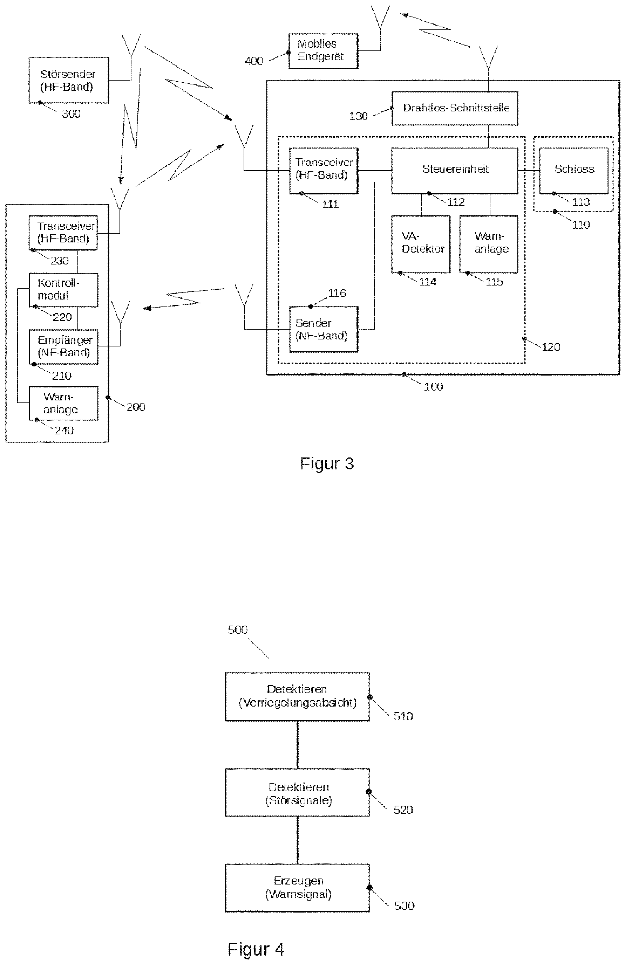

Figur 3 zeigt ein weiteres Ausführungsbeispiel eines PK-Systems mit einer Vorrichtung 120 zur Erkennung einer Manipulation einer Kommunikation zwischen einer fernbedienbaren Verriegelungseinheit 110 und einer korrespondierenden Fernbedienung 200. Bei dem zu verriegelnden Objekt 100 handele es sich wieder beispielhaft um ein Kfz 100 und bei der korrespondierenden Fernbedienung 200 um einen authentifizierbaren Schlüssel 200. Die Einrichtung 111 und die Einrichtung 230 können als im HF-Band arbeitende Transceiver 111 beziehungsweise 230 und zur Detektion von Störsignalen ausgebildet sein. Damit kann auch eine bidirektionale Kommunikation im HF-Band zwischen der Vorrichtung 120 und dem authentifizierbaren Schlüssel 200 ermöglicht werden. Werden nun in der Vorrichtung 120 eine Verriegelungsabsicht mittels eines VA-Detektors 114 und das Vorhandensein von Störsignalen mittels des Transceivers 111 detektiert, so kann die Steuereinheit 112 nicht nur durch die Warnanlage 115 ein Warnsignal ausgeben lassen, sondern auch über den Transceiver 111 oder/und über den NF-Sender 116 eine Nachricht an den authentifizierbaren Schlüssel 200 senden, so dass dieser über eine ihm zugeordnete Warnanlage 240 ein Warnsignal erzeugen kann.

Der Transceiver 111 und/oder der NF-Sender 116 können dabei die dem Warnsignal zugeordnete Nachricht über mehrere Funkkanäle im HF-Band beziehungsweise im NF-Band übertragen. Die Übertragung der Nachricht über die einzelnen Funkkanäle kann dabei gleichzeitig, das heißt parallel, mit einem Zeitversatz und/oder wiederholt durchgeführt werden. Ein Vorteil an der beschriebenen Nutzung mehrerer Funkkanäle kann sein, dass die Übertragung der dem Warnsignal zugeordneten Nachricht robuster, das heißt weniger störanfällig werden kann. Insbesondere kann vorteilhaft sein, einen Funkkanal im HF-Band und einen Funkkanal im NF-Band zu nutzen, da der Frequenzbereich von Störsignalen häufig das HF-Band betreffen kann und Störungen vornehmlich in diesem Frequenzband zu erwarten sein können. Oft können Störsignale nicht eine derart große Bandbreite haben, dass sie sowohl das HF-Band als auch das NF-Band stören können, so dass in der Regel in zumindest einem Frequenzband eine Nachrichtenübertragung funktionieren kann.
Darüber hinaus können der Transceiver 111 und die Steuereinheit 112 so ausgebildet sein, dass sie vor Versenden der Nachricht überprüfen können, welche Funkkanäle im HF-Band gestört sind beziehungsweise in welchem Funkkanal die Störleistung minimal ist, um diesen Funkkanal oder Funkkanäle mit geringer Störleistung für die Nachrichtenübertragung zu nutzen. Ist der NF-Sender 116 zusätzlich dazu ausgebildet, beispielsweise mittels eines im NF-Band empfindlichen Pegeldetektors mit vorgeschaltetem Richtkoppler, der zum Beispiel in einem Signalpfad zwischen der dem NF-Sender 116 zugeordneten Antenne und einem Sendesignalausgang des NF-Senders 116 angeordnet sein kann, Störsignale im NF-Band zu detektieren und deren Leistung zu bestimmen, so kann auch im NF-Band ein Funkkanal gefunden werden, in dem die Störleistung minimal ist und welcher damit bevorzugt für die Übertragung der dem Warnsignal zugeordneten Nachricht genutzt werden kann.
Ferner kann durch die mehrkanalige Übertragung der dem Warnsignal zugeordneten Nachricht eine Korrelation von Empfangssignalen, welche der Nachricht zugeordnet sind, im Kontrollmodul 220 vorgenommen werden. Dabei können die Empfangssignale der einzelnen Funkkanäle innerhalb der Frequenzbänder und/oder auch bandübergreifend, das heißt, auch Empfangssignale von Funkkanälen aus dem NF-Band mit solchen aus dem HF-Band miteinander korreliert werden. Durch die Korrelation kann häufig das SINR bei Empfang der Nachricht angehoben werden, insbesondere falls die Störsignale, wie oft der Fall, in den einzelnen Funkkanälen unkorreliert sind.
Bei wiederholten Versenden durch den Transceiver 111 und/oder den NF-Sender 116 und Empfangen der dem Warnsignal zugeordneten Nachricht am Transceiver 230 beziehungsweise am Empfänger 210 kann außerdem zusätzlich oder alternativ eine Korrelation im Zeitbereich der dabei empfangenen Signale von zum Beispiel dem Kontrollmodul 220 durchgeführt werden und damit ebenfalls das SINR bei Empfang der Nachricht angehoben werden, insbesondere falls die Störsignale zeitlich unkorreliert sind. Dies kann zum Beispiel der Fall sein, wenn der Störsender 300 verschiedene Codes zum Entriegeln des Kfz 100 sendet, um diese nacheinander am Kfz beziehungsweise an dessen Verriegelungseinheit 110 auszuprobieren, oder ein rauschähnliches, mit anderen Worten, ein unkorreliertes Signal erzeugt.
Die Korrelation kann somit selbst bei Störung der Funkkanäle oft einen fehlerfreien Empfang der dem Warnsignal zugeordneten Nachricht am authentifizierbaren Schlüssel 200 ermöglichen.
Durch die beschriebenen Maßnahmen kann der Nutzer folglich zusätzlich über den authentifizierbaren Schlüssel 200 davor gewarnt werden, dass die Übertragung des Verriegelungscodes gestört wird und das Kfz 100 nicht verriegelt sein könnte. Bei dem von der Warnanlage 240 erzeugten Warnsignal kann es sich zum Beispiel um einen Vibrationsalarm oder um ein akustisches Signal handeln.

Darüber hinaus kann in einigen Ausführungsbeispielen das Kfz 100 eine Schnittstelle 130 für eine drahtlose Kommunikation, wie zum Beispiel eine Bluetooth- oder WLAN-Schnittstelle umfassen. Nach Detektion einer Verriegelungsabsicht und nach Detektion von Störsignalen kann die Steuereinheit 112 über die Schnittstelle 130 eine einem Warnsignal zugeordnete Nachricht an ein mobiles Endgerät 400 übertragen. Das mobile Endgerät 400, zum Beispiel ein Smartphone, kann dabei zum Beispiel dem Nutzer des Kfz 100 zugeordnet sein. Infolgedessen kann das mobile Endgerät 400 ein Warnsignal, zum Beispiel einen Vibrationsalarm und/oder ein akustisches Signal, erzeugen und/oder eine Warnungsmeldung in Text- oder Bildform auf einer dem mobilen Endgerät zugeordneten Anzeigeeinheit ausgeben.

Ferner kann in manchen Ausführungsbeispielen der authentifizierbare Schlüssel 200 über den Transceiver 230 Störer im HF-Band detektieren. Da ein Störsender 300 meist nur die Kommunikation im HF-Band beeinträchtigt, kann der authentifizierbare Schlüssel 200 über eine vom VA-Detektor 114 detektierte Verriegelungsabsicht über das NF-Band benachrichtigt werden. Jetzt können die beiden oben bereits genannten Bedingungen, das sind die Detektion einer Verriegelungsabsicht und die Detektion von Störsignalen, an dem Kontrollmodul 220 des authentifizierbaren Schlüssels 200 erfüllt sein und in diesem Falle das Kontrollmodul 220 über die Warnanlage 240 ein Warnsignal ausgeben.

Darüber hinaus kann in einigen Ausführungsbeispielen der authentifizierbare Schlüssel 200 eine Schnittstelle für eine drahtlose Kommunikation (hier nicht gezeigt) umfassen. Nach Detektion einer Verriegelungsabsicht, zum Beispiel durch Empfang einer Benachrichtigung über das NF-Band, und nach Detektion von Störsignalen kann der authentifizierbare Schlüssel 200 über diese Schnittstelle eine Nachricht an ein mobiles Endgerät 400 senden, so dass dieses seinerseits ein Warnsignal und/oder eine Warnmeldung erzeugt, um den Nutzer des Kfz 100 davor zu warnen, dass die Kommunikation zwischen dem authentifizierbare Schlüssel 200 und der Verriegelungseinheit 110 gestört wird und das Kfz möglicherweise nicht verriegelt ist. Abschließend illustriert Figur 4 ein Flussdiagramm eines Ausführungsbeispiels eines Verfahrens 500 zur Erkennung einer Manipulation einer Kommunikation zwischen einer fernbedienbaren Verriegelungseinheit 110 und einer dazu korrespondierenden Fernbedienung 200. Das Verfahren umfasst ein Detektieren 510 einer Verriegelungsabsicht. Kann eine Verriegelungsabsicht detektiert werden, so kann im nächsten Verfahrensschritt ein Detektieren 520 von die Kommunikation beeinträchtigenden Störsignalen durchgeführt werden. Können solche Störsignale detektiert werden, so wird in einem anschließenden Schritt des Verfahrens ein Erzeugen 530 eines Warnsignals durchgeführt.
Es versteht sich, dass es sich bei dem in Figur 4 beschriebenen Ausführungsbeispiel eines Verfahrens zur Erkennung einer Manipulation einer Kommunikation zwischen einer fernbedienbaren Verriegelungseinheit 110 und einer dazu korrespondierenden Fernbedienung 200 nur um eine von vielen möglichen Implementierungsformen dieses Verfahrens handelt. So können zum Beispiel der erste und der zweite Verfahrensschritt in der Reihenfolge vertauscht werden, das heißt, es lässt sich auch zuerst das Detektieren 520 von die Kommunikation beeinträchtigenden Störsignalen durchführen und im Anschluss daran das Detektieren 510 einer Verriegelungsabsicht. Ferner können diese Verfahrensschritte auch simultan durchgeführt werden. Auch ist es möglich weitere zusätzliche Verfahrensschritte einzufügen, ohne dass dabei der Rahmen des hier dargestellten Verfahrens 500 verlassen wird.

### Bezugszeichenliste

- 100: Zu verriegelndes Objekt beziehungsweise zu verriegelndes Kfz
- 110: Fernbedienbare Verriegelungseinheit beziehungsweise fernbedienbare Zentralverriegelung
- 111: Empfänger
- 112: Steuereinheit
- 113: Schloss
- 114: Einrichtung zur Detektion einer Verriegelungsabsicht (VA-Detektor)
- 115: Einrichtung zur Erzeugung eines Warnsignals (Warnanlage)
- 116: Sender
- 120: Vorrichtung zur Erkennung einer Manipulation einer Kommunikation zwischen einer fernbedienbaren Verriegelungseinheit und einer dazu korrespondierenden Fernbedienung
- 130: Schnittstelle für eine drahtlose Kommunikation
- 200: Korrespondierende Fernbedienung beziehungsweise authentifizierbarer Schlüssel
- 210: Empfänger
- 220: Kontrollmodul
- 230: Sender
- 240: Warnanlage
- 300: Störsender
- 400: Mobiles Endgerät
- 500: Verfahren zur Erkennung einer Manipulation einer Kommunikation zwischen einer fernbedienbaren Verriegelungseinheit und einer dazu korrespondierenden Fernbedienung
- 510: Detektieren
- 520: Detektieren
- 530: Erzeugen

## Patentansprüche

1. Verfahren (500) zur Erkennung einer Manipulation einer Kommunikation zwischen einer fernbedienbaren Verriegelungseinheit (110) eines Kraftfahrzeugs (100) und einer dazu korrespondierenden Fernbedienung (200), umfassend:
Detektieren (510) einer Verriegelungsabsicht;
sofern die Verriegelungsabsicht detektiert wurde, Detektieren (520) von die Kommunikation beeinträchtigenden Störsignalen; und
Erzeugen (530) eines Warnsignals, sofern ein die Kommunikation beeinträchtigendes Störsignal detektiert wurde, **dadurch gekennzeichnet, dass** das Detektieren (510) der Verriegelungsabsicht ein Auswerten in der Fahrertür und im Fahrersitz des Kraftfahrzeugs (100) vorgesehener Kontaktsensoren oder eines an einem Türgriff des Kraftfahrzeugs (100) vorgesehenen Näherungssensors umfasst.

2. Verfahren (500) nach Anspruch 1, ferner umfassend:
Bestimmen der Leistung von empfangenen Signalen;
Klassifizieren der empfangenen Signale als die Kommunikation beeinträchtigende Störsignale, falls deren Leistung einen vorher festgelegten Grenzwert überschreitet; und
Erzeugen (530) eines Warnsignals, sofern ein empfangenes Signal als Störsignal klassifiziert wurde.

3. Verfahren (500) nach einem der vorhergehenden Ansprüche, ferner umfassend:
Bestimmen einer empfangenen Störleistung in wenigstens zwei für die Kommunikation zwischen der fernbedienbaren Verriegelungseinheit (110) und der dazu korrespondierenden Fernbedienung (200) verwendbaren Funkkanälen;
Auswahl des Funkkanals mit der geringsten empfangenen Störleistung für die Kommunikation zwischen der fernbedienbaren Verriegelungseinheit (110) und der dazu korrespondierenden Fernbedienung (200); und
Kommunikation zwischen der fernbedienbaren Verriegelungseinheit (110) und der dazu korrespondierenden Fernbedienung (200) über diesen Funkkanal.

4. Verfahren (500) nach einem der vorhergehenden Ansprüche, ferner umfassend:
Überprüfen einer Authentifizierung der Fernbedienung (200); und
Erzeugen des Warnsignals in Ermangelung der Authentifizierung.

5. Verfahren (500) nach einem der vorhergehenden Ansprüche, wobei das Detektieren (510) der Verriegelungsabsicht deren Detektion seitens der Verriegelungseinheit (110) umfasst.

6. Verfahren (500) nach einem der vorhergehenden Ansprüche, wobei das Detektieren (520) der Störsignale deren Detektion seitens der Verriegelungseinheit (110) umfasst.

7. Verfahren (500) nach einem der vorhergehenden Ansprüche, wobei das Erzeugen (530) des Warnsignals dessen Erzeugung seitens der Verriegelungseinheit (110) umfasst.

8. Verfahren (500) nach einem der vorhergehenden Ansprüche, wobei das Detektieren (520) der Störsignale deren Detektion seitens der Fernbedienung (200) umfasst.

9. Verfahren (500) nach einem der vorhergehenden Ansprüche, wobei das Erzeugen (530) des Warnsignals dessen Erzeugung seitens der Fernbedienung (200) umfasst.

10. Verfahren (500) nach einem der vorhergehenden Ansprüche, wobei das Erzeugen (530) des Warnsignals Folgendes umfasst:
Übertragung einer dem Warnsignal zugeordneten Nachricht über eine drahtlose Kommunikationsverbindung zu einem mobilen Endgerät (400); und
Erzeugen (530) des Warnsignals auf dem mobilen Endgerät (400).

11. Vorrichtung zur Erkennung einer Manipulation einer Kommunikation zwischen einer fernbedienbaren Verriegelungseinheit (110) eines Kraftfahrzeugs (100) und einer dazu korrespondierenden Fernbedienung (200), umfassend:
eine Einrichtung zum Detektieren (510) einer Verriegelungsabsicht, umfassend in der Fahrertür und im Fahrersitz des Kraftfahrzeugs (100) vorgesehenen Kontaktsensoren oder einen an
einem Türgriff des Kraftfahrzeugs (100) vorgesehenen Näherungssensor;
eine Einrichtung zum Detektieren von die Kommunikation beeinträchtigenden Störsignalen, die aktiv wird, falls eine Verriegelungsabsicht detektiert wurde; und
eine Einrichtung zum Erzeugen (530) eines Warnsignals, sofern ein die Kommunikation beeinträchtigendes Störsignal detektiert wurde,
wobei die Einrichtung zum Detektieren (510) der Verriegelungsabsicht ausgebildet ist, um die Kontakt- und/oder Näherungssensoren auszuwerten.

## Claims

1. Method (500) for detecting a manipulation of a communication between a remotely controllable locking unit (110) of a motor vehicle (100) and a remote control (200) corresponding thereto, comprising:
detecting (510) a locking intention;
if the locking intention has been detected, detecting (520) interference signals impairing the communication; and
generating (530) a warning signal if an interference signal impairing the communication has been detected,
**characterized in that**
the detecting (510) of the locking intention comprises evaluating contact sensors, provided in the driver's door and in the driver's seat of the motor vehicle (100), or a proximity sensor provided on a door handle of the motor vehicle (100).

2. Method (500) according to Claim 1, further comprising:
determining the power of received signals;
classifying the received signals as interference signals impairing the communication if the power of said signals exceeds a previously stipulated limit value; and
generating (530) a warning signal if a received signal has been classified as an interference signal.

3. Method (500) according to either of the preceding claims, further comprising:
determining a received interference power in at least two radio channels usable for the communication between the remotely controllable locking unit (110) and the remote control (200) corresponding thereto;
selection of the radio channel having the lowest perceived interference power for the communication between the remotely controllable locking unit (110) and the remote control (200) corresponding thereto; and
communication between the remotely controllable locking unit (110) and the remote control (200) corresponding thereto via this radio channel.

4. Method (500) according to one of the preceding claims, further comprising:
checking an authentication of the remote control (200); and
generating the warning signal in the absence of the authentication.

5. Method (500) according to one of the preceding claims, wherein the detecting (510) of the locking intention comprises detection thereof by the locking unit (110).

6. Method (500) according to one of the preceding claims, wherein the detecting (520) of the interference signals comprises detection thereof by the locking unit (110).

7. Method (500) according to one of the preceding claims, wherein the generating (530) of the warning signal comprises generation thereof by the locking unit (110).

8. Method (500) according to one of the preceding claims, wherein the detecting (520) of the interference signals comprises detection thereof by the remote control (200).

9. Method (500) according to one of the preceding claims, wherein the generating (530) of the warning signal comprises generation thereof by the remote control (200).

10. Method (500) according to one of the preceding claims, wherein the generating (530) of the warning signal comprises the following:
transmission of a message associated with the warning signal to a mobile terminal (400) via a wireless communication connection; and
generating (530) the warning signal on the mobile terminal (400).

11. Apparatus for detecting a manipulation of a communication between a remotely controllable locking unit (110) of a motor vehicle (100) and a remote control (200) corresponding thereto, comprising:
a device for detecting (510) a locking intention, comprising contact sensors, provided in the driver's door and in the driver's seat of the motor vehicle (100), or a proximity sensor provided on a door handle of the motor vehicle (100);
a device for detecting interference signals impairing the communication, which becomes active if a locking intention has been detected; and
a device for generating (530) a warning signal if an interference signal impairing the communication has been detected,
wherein the device for detecting (510) the locking intention is designed to evaluate the contact and/or proximity sensors.

## Revendications

1. Procédé (500) pour reconnaître une manipulation d'une communication entre une unité de verrouillage télécommandable (110) d'un véhicule automobile (100) et une télécommande (200) qui lui correspond, comprenant :
la détection (510) d'une intention de verrouillage ;
si l'intention de verrouillage a été détectée, la détection (520) de signaux de brouillage perturbant la communication ; et
la génération (530) d'un signal d'avertissement si un signal de brouillage perturbant la communication a été détecté,
**caractérisé en ce que** la détection (510) de l'intention de verrouillage comprend l'évaluation de capteurs de contact prévus dans la porte du conducteur et dans le siège du conducteur du véhicule automobile (100) ou un capteur de proximité prévu sur une poignée de porte du véhicule automobile (100).

2. Procédé (500) selon la revendication 1, comprenant en outre :
la détermination de la puissance de signaux reçus ;
le classement des signaux reçus comme étant des signaux de brouillage perturbant la communication si leur puissance dépasse une valeur limite prédéterminée ; et
la génération (530) d'un signal d'avertissement si un signal reçu a été classé comme étant un signaux de brouillage.

3. Procédé (500) selon l'une quelconque des revendications précédentes, comprenant en outre :
la détermination d'une puissance de brouillage reçue dans au moins deux canaux radio utilisables pour la communication entre l'unité de verrouillage télécommandable (110) et la télécommande correspondante (200) ;
la sélection du canal radio présentant la puissance de brouillage reçue la plus faible pour la communication entre l'unité de verrouillage télécommandable (110) et la télécommande (200) qui lui correspond ; et
la communication entre l'unité de verrouillage télécommandable (110) et la télécommande (200) qui lui correspond par l'intermédiaire du canal radio.

4. Procédé (500) selon l'une quelconque des revendications précédentes, comprenant en outre :
la vérification d'une authentification de la télécommande (200) ; et
la génération du signal d'avertissement en l'absence de l'authentification.

5. Procédé (500) selon l'une quelconque des revendications précédentes, dans lequel la détection (510) de l'intention de verrouillage comprend sa détection du côté de l'unité de verrouillage (110).

6. Procédé (500) selon l'une quelconque des revendications précédentes, dans lequel la détection (520) des signaux parasites comprend leur détection du côté de l'unité de verrouillage (110).

7. Procédé (500) selon l'une quelconque des revendications précédentes, dans lequel la génération (530) du signal d'avertissement comprend sa génération du côté de l'unité de verrouillage (110).

8. Procédé (500) selon l'une quelconque des revendications précédentes, dans lequel la détection (520) des signaux de brouillage comprend leur détection du côté de la télécommande (200).

9. Procédé (500) selon l'une quelconque des revendications précédentes, dans lequel la génération (530) du signal d'avertissement comprend sa génération du côté de la télécommande (200).

10. Procédé (500) selon l'une quelconque des revendications précédentes, dans lequel la génération (530) du signal d'avertissement comprend :
la transmission d'un message associé au signal d'avertissement par l'intermédiaire d'une liaison de communication sans fil à un terminal mobile (400) ; et
la génération (530) du signal d'avertissement sur le terminal mobile (400).

11. Dispositif pour reconnaître une manipulation d'une communication entre une unité de verrouillage télécommandable (110) d'un véhicule automobile (100) et une télécommande (200) qui lui correspond, comprenant :
un moyen pour détecter (510) une intention de verrouillage, comprenant des capteurs de contact prévus dans la porte du conducteur et dans le siège du conducteur du véhicule automobile (100) ou un capteur de proximité prévu sur une poignée de porte du véhicule automobile (100) ;
un moyen pour détecter des signaux de brouillage perturbant la communication, qui devient actif lorsqu'une intention de verrouillage a été détectée ; et
un moyen pour générer (530) un signal d'avertissement si un signal de brouillage perturbant la communication a été détecté,
dans lequel le moyen pour détecter (510) l'intention de verrouillage est conçu pour évaluer les capteurs de contact et/ou de proximité.
